# EUROPEAN PATENT APPLICATION

(11) **EP 1 796 298 A1**
(43) Date of publication of application: **13.06.2007**
(21) Application number: 06125523.8
(22) Date of filing: 06.12.2006
(51) Int. Cl.: H04H 1/00

(54) **Digital multimedia player and method of providing digital multimedia broadcasting**

(30) Priority: 06.12.2005 KR 20050118018; 18.01.2006 KR 20060005416
(71) Applicant: Samsung Electronics Co., Ltd., Suwon-si, Gyeonggi-Do (KR)
(72) Inventor: Chung, In-hwa, Suwon-si Gyeonggi-do (KR)
(74) Representative: Zimmer, Franz-Josef

(57) **Abstract**

A digital multimedia player that can receive and provide digital multimedia broadcasting (DMB), and a method of providing DMB in the digital multimedia player, the method including: receiving digital multimedia broadcasting; analyzing a user input signal input through a user interface; and changing a broadcast channel, providing a tool menu, and performing audio/video recording of the received DMB in response to the user input signal. Accordingly, the digital multimedia player can provide DMB.

## Description

Aspects of the present invention relate to a digital multimedia player that can receive and provide digital multimedia broadcasting (DMB) in addition to playing back video and music, and a method of providing DMB in the digital multimedia player.

Digital audio broadcasting (DAB) uses the latest audio coding method having a high compression rate so as to provide not only a high quality audio service with compact disk (CD) audio quality, but also various value added data services, such as weather, traffic, entertainment, and video. EUREKA-147 DAB, used in Europe, uses a high quality audio compression technique based on a moving pictures experts group (MPEG) audio layer II, thereby providing an audio service with CD audio quality and various value added data services. Digital multimedia broadcasting (DMB) is a development of DAB. DMB provides audio, video, and data broadcasting.

With the development of DMB using a ground wave, there is a need to increase the convenience with which a user can use digital multimedia contents. To this end, a DMB receiving function must be integrated into a digital multimedia player capable of playing back various digital multimedia contents.

It is the object of the present invention to provide a digital multimedia player that can receive and provide digital multimedia broadcasting (DMB) in addition to playing back video and music, and a method of providing DMB in the digital multimedia player.

This object is solved by the subject matter of the independent claims.

Preferred embodiments are defined in the dependent claims.

According to an aspect of the present invention, there is provided a digital multimedia player comprising: a tuner to output a digital broadcast signal transmitted through a digital broadcast channel; a broadcast signal processor to output a broadcasting service selected by a user from a plurality of broadcasting services contained in the digital broadcast signal; a decoder to decode the output broadcasting service; a storage to store information on a broadcast channel list; a user interface that includes a key pad, wherein a user input signal is input through the user interface and the user interface transmits the user input signal to a controller; a display to output a decoded video signal output from the decoder; and a controller to control the tuner, the broadcast signal processor, the decoder, the storage, the user interface, and the display so as to provide received DMB to the display, to analyze the user input signal input through the user interface, to change the broadcast channel, to provide a tool menu, and to perform audio and/or video recording of the received digital multimedia broadcasting in response to the user input signal.

The controller may provide the broadcast channel list stored in the storage through the display in response to the user input signal input through the user interface.

The tuner, the broadcast signal processor, and the decoder may be controlled to provide a broadcasting service received through the broadcast channel selected in response to the broadcast channel selection signal when a broadcast channel selection signal is input through the user interface.

A message indicating a state of reception of a broadcast signal of the digital multimedia broadcasting may be generated and provided.

The tool menu provided by the controller may include one or more items selected from: a channel re-search menu through which a broadcast channel is researched to be stored, a channel-mode-based search through which broadcast channel information is provided by searching video, audio, and data channels, a broadcast scene capture through which a particular broadcast scene is captured, a screen size selection through which a size of broadcast screen is selected, a channel list which provides a channel list stored in the storage to change channel, and a broadcast screen turn-off through which a screen display is turned off while broadcasting is provided.

The controller may search for channel information and service information transmitted and contained in the received broadcast signal according to a search request signal or may search for information on a broadcast channel list stored in the storage, so that a list of channels requested to be searched for is provided through the display when a signal to request a channel mode selected from among a video channel mode in which only video channels can be searched, an audio channel mode in which only audio channels can be searched, and a data channel mode in which only data channels can be searched is input through the user interface,.

According to another aspect of the present invention, there is provided a method of providing DMB, comprising: receiving DMB; analyzing a user input signal input through a user interface; and changing a broadcast channel, providing a tool menu, and performing audio and/or video recording of the received DMB in response to the user input signal.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIGs. 1A and 1 B illustrate an outer appearance of a digital multimedia player according to an embodiment of the present invention;
FIG. 2 illustrates a structure of a menu provided by a digital multimedia player according to an embodiment of the present invention;
FIGs. 3A to 3G illustrate screens provided by a digital multimedia player operating in a DMB mode according to an embodiment of the present invention;
FIGs. 4A to 4N illustrate screens provided by a digital multimedia player operating in a video mode according to an embodiment of the present invention;
FIGs. 5A to 5H illustrate screens provided by a digital multimedia player operating in a photo mode according to an embodiment of the present invention;
FIGs. 6A to 6E illustrate screens provided by a digital multimedia player operating in a music mode according to an embodiment of the present invention;
FIGs. 7A to 7E illustrate screens provided by a digital multimedia player operating in a text mode according to an embodiment of the present invention;
FIG. 8 is a block diagram illustrating an inner structure of a digital multimedia player according to an embodiment of the present invention;
FIG. 9 is a block diagram illustrating the structure of the digital multimedia player of FIG. 8 in greater detail; and
FIG. 10 is a flowchart illustrating a method of providing digital multimedia broadcasting according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

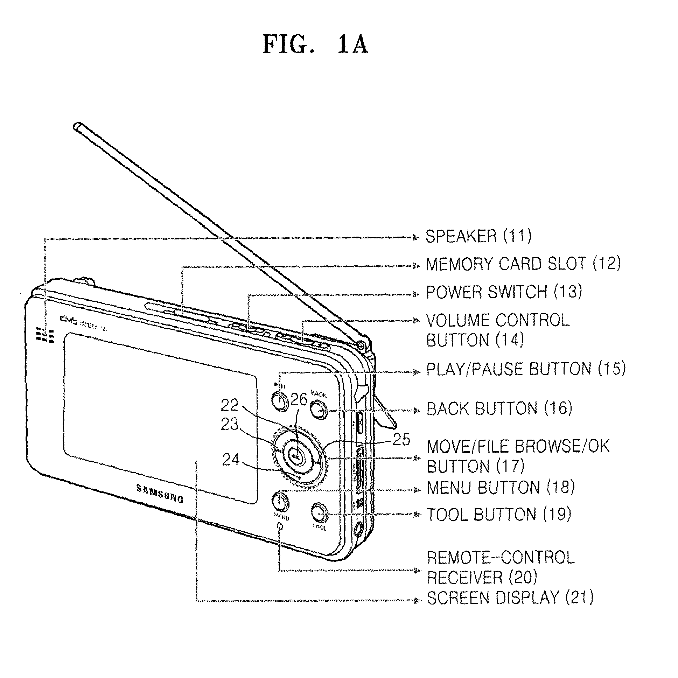

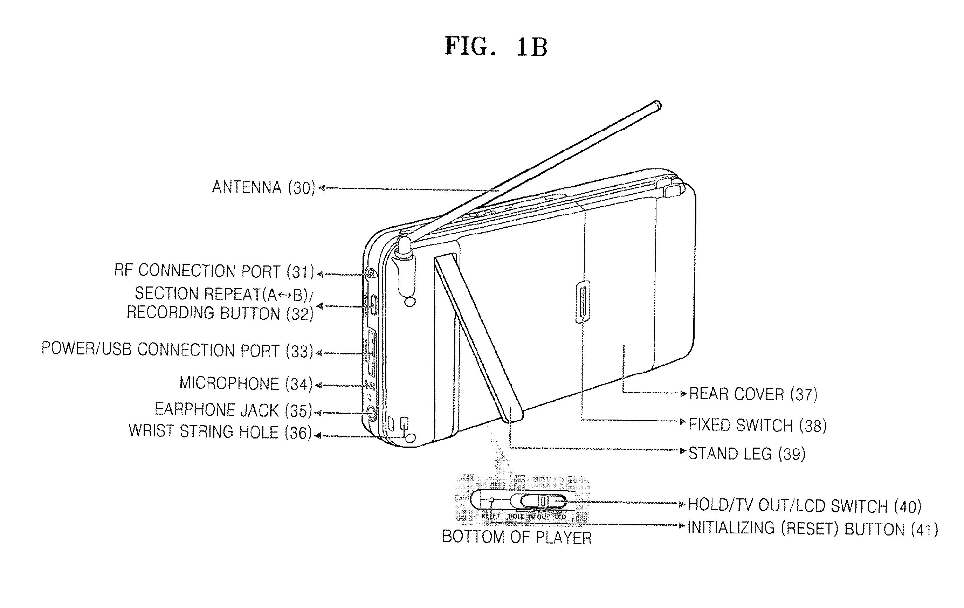

FIGs. 1 A and 1 B illustrate an outer appearance of a digital multimedia player according to an embodiment of the present invention.

Referring to FIG. 1A, a front of the digital multimedia player is provided with a speaker 11, a memory card slot 12, a power switch 13, a volume control button 14, a play/pause button 15, a back button 16, a move/file browse/OK button 17, a menu button 18, a tool button 19, a remote-control receiver 20, and a screen display 21. To disable inputs through buttons of the digital multimedia player, the power switch 13 is pushed to the left. To turn power on/off, the power switch 13 is pushed to the right. According to an aspect, the volume control button 14 may include a (+) button and a (-) button. The (+) button is pressed to increase the volume and the (-) button is pressed to decrease the volume. It is understood that the volume may be controlled by other menus, such as through a menu screen or a rotatable dial. The play/pause button 15 is pressed to perform playback or pause of the multimedia content. The back button 16 is pressed to return to a previous menu screen and/or step. An OK button 26 of the move/file browse/OK button 17 is pressed to select a menu or to perform a function. Up and down buttons 22 and 24 of the move/file browse/OK button 17 are pressed not only to move to an upper/lower item of a menu, but also to select a DMB provider. Left and right buttons 23 and 25 of the move/file browse/OK button 17 are pressed to move to a previous/next screen or to a previous/next track. The menu button 18 is pressed to open and close a menu screen. The tool button 19 is pressed to open and close a tool menu.

Referring to FIG. 1 B, a rear of the digital multimedia player is provided with an antenna 30, a radio frequency (RF) connection port 31, a section repeat(A↔B)/recording button 32, a power/universal serial bus (USB) connection port 33, a microphone 34, an earphone jack 35, a wrist string hole 36, a rear cover 37, a fixed switch 39, and a stand leg 38. A bottom of the digital multimedia player is provided with a HOLD/TV OUT/LCD switch 40 and an initializing (reset) button 41. The section repeat(A↔B)/recording button 32 is pressed and held to start recording. The section repeat(A↔B)/recording button 32 is pressed and released quickly to repeat a section or to stop recording. The HOLD/TV OUT/LCD switch 40 is pushed towards HOLD to disable input through buttons of the digital multimedia player. The HOLD/TV OUT/LCD switch 40 is pushed towards TV/OUT to output video/audio to a television (TV) set. The HOLD/TV OUT/LCD switch 40 is pushed towards liquid crystal display (LCD) to output video to the screen display of the digital multimedia player.

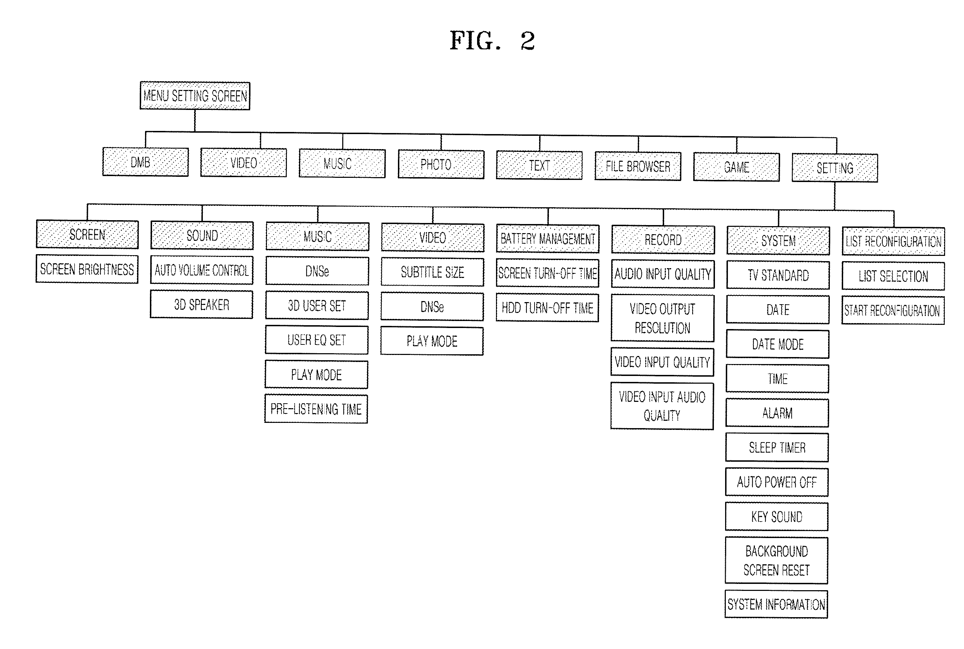

FIG. 2 illustrates a structure of a menu provided by a digital multimedia player according to an embodiment of the present invention. Referring to FIG. 2, the digital multimedia player provides a menu including a DMB mode, a video mode, a music mode, a photo mode, a text mode, a file browser mode, a game mode, and a setting mode. Now, user interfaces of the respective modes will be described.

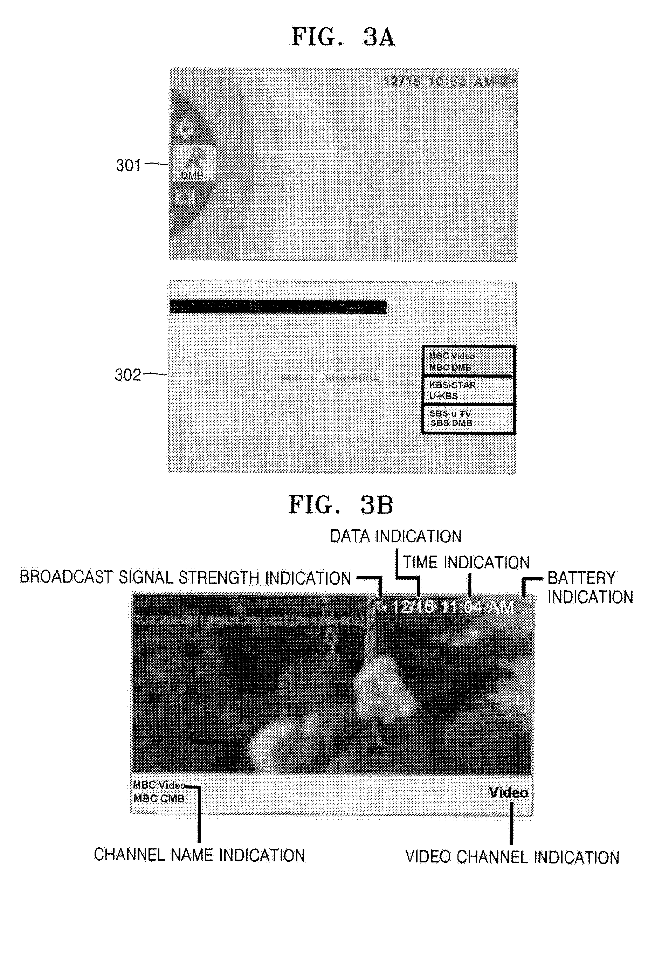

FIGs. 3A to 3G illustrate screens provided by a digital multimedia player operating in a DMB mode according to an embodiment of the present invention.

An operation to watch DMB content, according to an aspect of the present invention, will now be described. In a screen 301 shown in FIG. 3A, the up and down buttons 22 and 24 are pressed to select the DMB mode, and the OK button 26 is pressed to execute the selected DMB mode. Initially, DMB channels are automatically searched as shown in a screen 302. Then, the results of the searching are stored, and names of received channels are displayed. According to an aspect, if DMB content has already been received, a list of recently received channel is displayed. The OK button 26 is pressed to stop the searching.

To view DMB information, the OK button 26 is pressed while watching DMB. Then, as shown in FIG. 3B, the DMB information is temporarily displayed before disappearing automatically. The DMB information includes a broadcast signal strength indication, a channel name indication, and a video channel indication, a date indication, a time indication, and a battery indication.

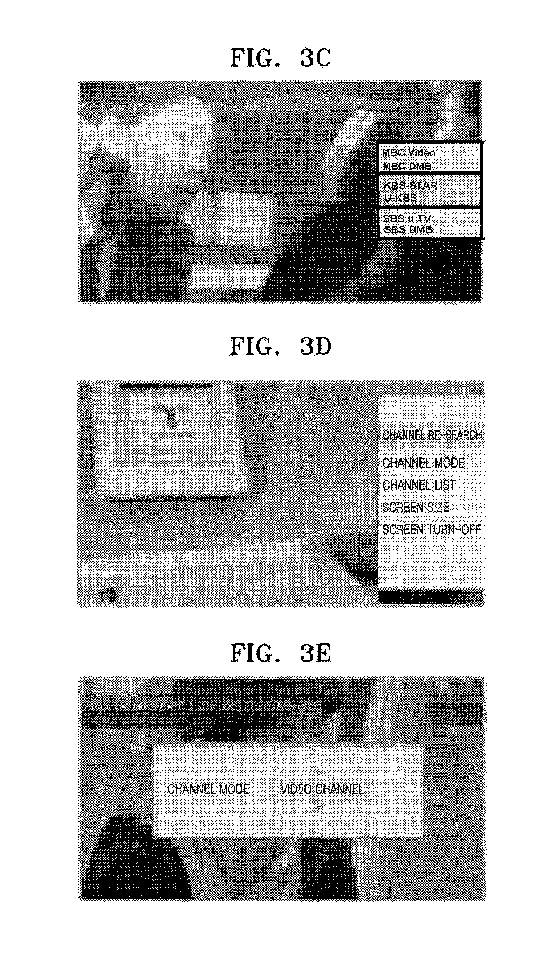

An operation to change DMB channels, according to an aspect of the present invention, will now be described. In a screen shown in FIG. 3C, the up and down buttons 22 and 24 are pressed to select a desired channel while receiving DMB, and the OK button 26 is pressed to receive DMB of the selected channel. When the selected channel is a video channel, a broadcasting program including combined video and audio can be received. When the selected channel is an audio channel, music and radio can be listened to. Like the video channel, visual radio broadcasting can provide video. To exit the DMB mode, the back button 16 or the menu button 18 is pressed to return to a menu screen.

A message indicating a DMB broadcasting state is displayed if a DMB signal is weak, or DMB is not received. The state of reception of DMB is displayed so that a user can adjust an antenna to a direction suitable for receiving a good signal or by moving to an area with a stronger DMB signal. The message may be, for example, "! Signal is weak. Please adjust the antenna or move to a place with less obstacles" or "! Channel search has failed". The message disappears when the OK button 26 is pressed.

An operation to use a tool menu, according to an aspect of the present invention, will now be described. The user may use various tool menus (e.g. a channel re-search, a channel mode, and a screen size) while receiving DMB. First, while watching and/or listening to the DMB content, the tool button 19 can be pressed to view a tool menu, and thus various menus can be selected. To exit from the tool menu, the tool button 19 or the back button 16 is pressed.

To re-search for a channel, in a screen shown in FIG. 3D, the up and down buttons 22 and 24 are pressed to select a <channel re-search> option, and the OK button 26 is pressed to search the DMB channels again. Then, the result of the re-search is stored, and names of received channels are displayed. Accordingly, in the digital multimedia player of the present invention, a conventional channel list can be searched again and stored according to a current reception state of broadcasting.

To search for channels in a specific channel mode (such as video channels, audio channels, or data channels), in a screen shown in FIG. 3E, the up and down buttons 22 and 24 are pressed to select a <channel mode> option, and the OK button 26 is pressed to execute. A channel mode setting window appears. If a <video channel> option is selected, only video channels can be searched. If an <audio channel> option is selected, only audio channels can be searched. If a <data channel> option is selected, only data channels can be searched. A desired channel mode is selected by pressing the up and down buttons 22 and 24, and the OK button 26 is pressed to execute the selected channel mode.

To capture a broadcast scene, the up and down buttons 22 and 24 are pressed to select a <capture> option, and the OK button is pressed to begin the capture. A desired scene can be captured in an appropriate file format, such as a JPG file format, and stored, for example, in a <captured> folder.

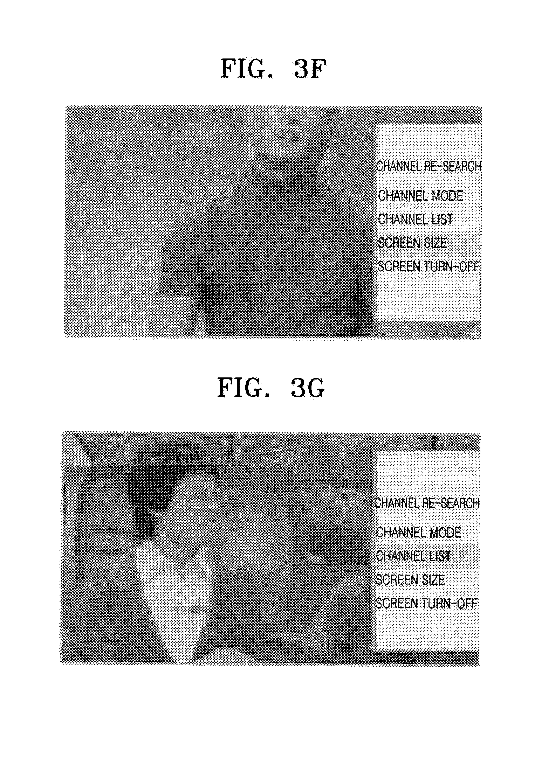

To select a screen size, in a screen shown in FIG. 3F, the up and down buttons 22 and 24 are pressed to select a <screen size> option, and the OK button 26 is pressed to execute. Then, a screen size setting icon appears. A desired screen size is selected by pressing the up and down buttons 22 and 24. Thereafter, when the OK button 26 is pressed, a screen size of DMB can be adjusted to fit the size of the screen display, or can be enlarged or minimized. If an <actual size> option is selected, the screen is viewed as an actual size of the received DMB. If a <zoom> option is selected, the screen is viewed zoomed in or out according to the size of the screen display and the user's manipulation.

To change channels in a channel list, in a screen shown in FIG. 3G, the up and down buttons 22 and 24 are pressed to select a <channel list> option, and the OK button 26 is pressed to execute. Then, a stored channel list appears. A desired channel is highlighted by pressing the up and down buttons 22 and 24, and then selected by pressing the OK button 26. The selected channel is displayed after receiving a broadcast of the selected channel.

To turn a broadcast screen off, the up and down buttons 22 and 24 are pressed to select a <screen turn-off> option, and the OK button 26 is pressed to turn off the screen display. The user uses this menu to temporarily turn the screen display off while watching DMB.

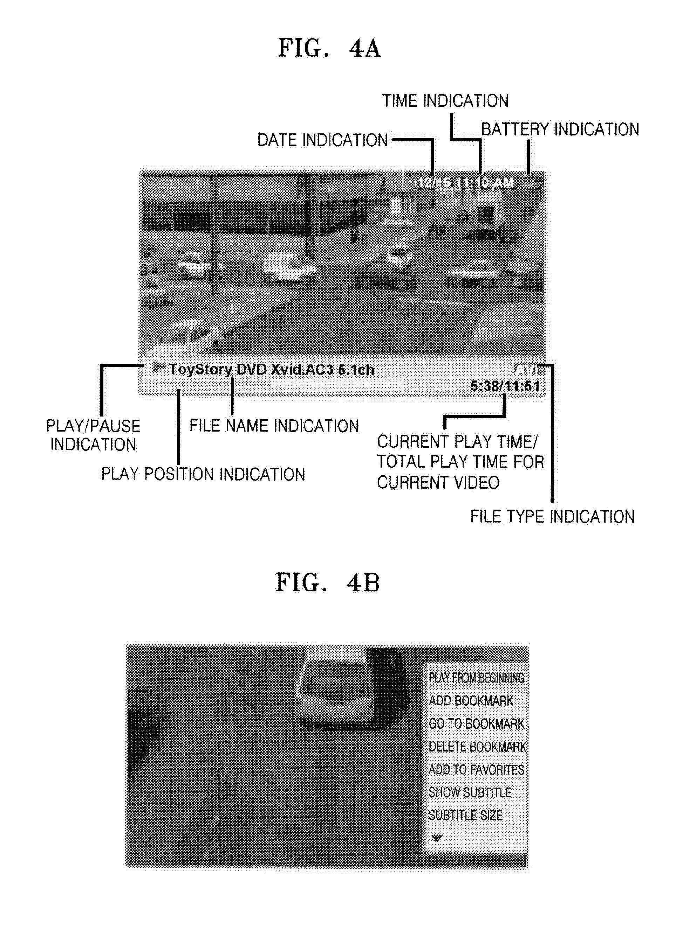

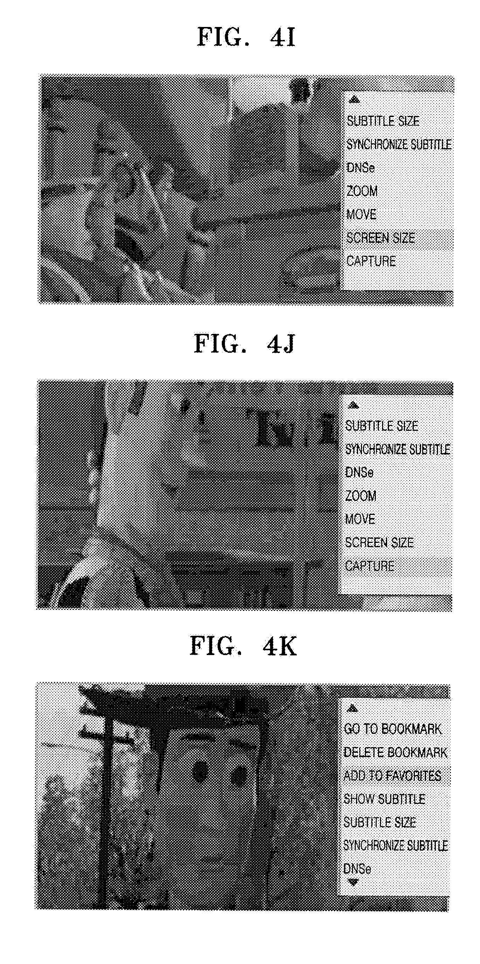

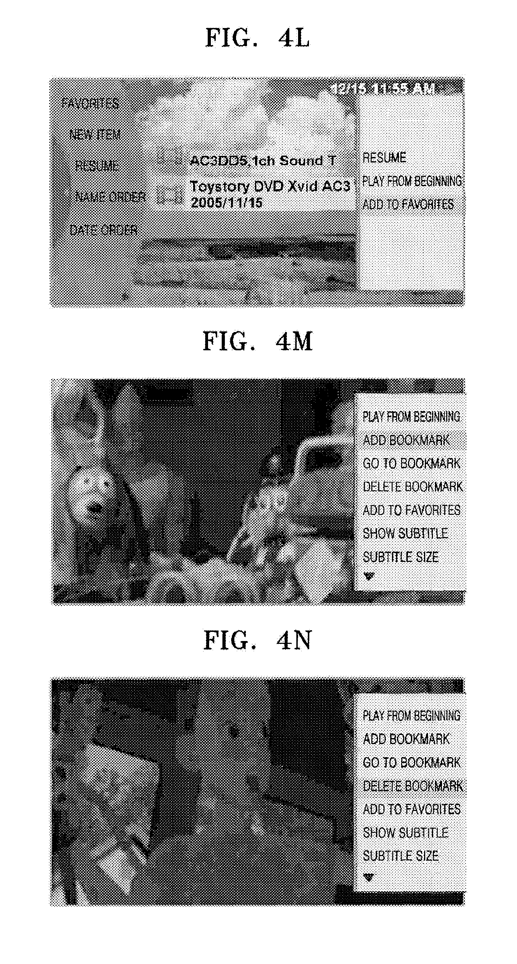

FIGs. 4A to 4N illustrate screens provided by a digital multimedia player operating in a video mode according to an embodiment of the present invention. First, the digital multimedia player is turned on, and the TV/LCD switch 40 is adjusted to LCD to output video to the screen display of the digital multimedia player. When a new file is imported, <setting>, <list reconfiguration>, and <start reconfiguration> may be selected.

An operation to watch video that is locally stored, according to an aspect of the present invention, will now be described. The up and down buttons 22 and 24 are pressed to select a <video> option, and the OK button 26 is pressed to execute. Then, a video menu appears. A desired item is selected by pressing the up and down buttons 22 and 24, and the OK button 26 is pressed to execute the selected item. If folders appear, a desired folder is selected by pressing the up and down buttons 22 and 24, and the OK button 26 is pressed to open the selected folder. Once a desired video file appears, the video file is selected by pressing the up and down buttons 22 and 24, and the OK button 26 is pressed to playback. If a <favorites> option is selected, files added to a <favorites> category or folder contained in the video menu are displayed. If a <new item> option is selected, a latest imported file is displayed. If a <resume> option is selected, video is played back starting from a point where video playing was previously stopped. If a <name order> option is selected, file names are displayed after being sorted in numerical order, alphabetical order, Korean alphabetical order, etc. If a <data order> option is selected, the file names are displayed after being sorted in the order of file creation date. It is understood that, according to other aspects, more, less, or different menu options may be provided.

To check video playback information, the OK button 26 is pressed while video is played back. Then, in a screen shown in FIG. 4A, video playback information appears temporarily at one portion of the screen before disappearing automatically. The video playback information includes a play/pause indication, a playback position indication, a file name indication, a current play time out of a total play time for a current video indication, a file type indication, a date indication, a time indication, and a battery indication.

To pause video, the play/pause button 15 is pressed while the video is played back. Each time the user presses the play/pause button 15, the video is paused or played back again. To find a desired portion in a video file, one of the left and right buttons 23 and 25 is pressed and held down while the video is played back. Then, the currently played video is moved forwards or backwards. To play back a previous or next video file, one of the left and right buttons 23 and 25 is pressed and released quickly while the video is played back.

An operation to use a video tool menu, according to an aspect of the present invention, will now be described. The tool button 19 is pressed while video is played back. Then, a tool menu appears. The video tool menu includes a <play from the beginning> option, an <add bookmark> option, a <go to bookmark> option, a <delete bookmark> option, an <add to favorites> option, a <show subtitle> option, a <subtitle size> option, a <synchronize subtitle> option, a <DNSe>option, a <zoom> option, and a <move> option.

To playback video from the beginning, in a screen shown in FIG. 4B, the up and down buttons 22 and 24 are pressed to select the <play from the beginning> option, and the OK button 26 is pressed to playback the video from the beginning.

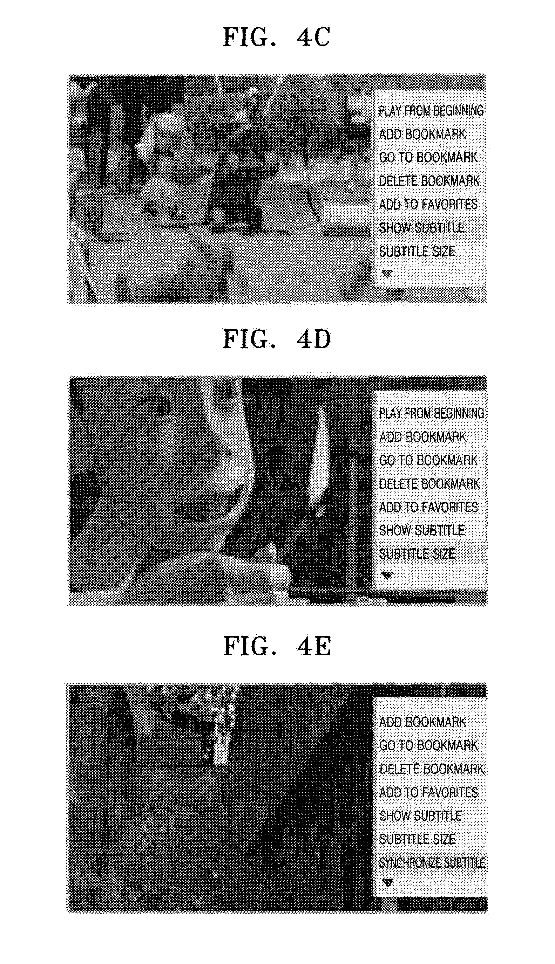

To view a subtitle, the up and down buttons 22 and 24 are pressed to select the <show subtitle> option, as shown in Fig. 4C, and the OK button 26 is pressed to execute. To remove the subtitle, a <hide subtitle> option is selected, and the OK button 26 is pressed to execute.

To select a subtitle size, the up and down buttons 22 and 24 are pressed to select a <screen size> option, as shown in FIG. 4D, and the OK button 26 is pressed to execute. Then, a subtitle size setting window appears. The up and down buttons 22 and 24 are pressed to select <large>, <normal>, or <small>, and the OK button 26 is pressed to execute the selected size.

When a video file includes a subtitle, the subtitle may appear earlier or later than the corresponding audio of the video. In this case, the <synchronize subtitle> option is used to set a time so that the subtitle can be viewed in synchronization with the video. In a tool menu of a screen shown in FIG. 4E, the up and down buttons 22 and 24 are pressed to select the <synchronize subtitle> option, and the OK button 26 is pressed to execute. When the subtitle synchronization setting widow appears, the up and down buttons 22 and 24 are pressed to select a time to synchronize the subtitle, and the OK button 26 is pressed to execute. For example, the greater a (-) number, the later the subtitle, and the greater a (+) number, the earlier the subtitle.

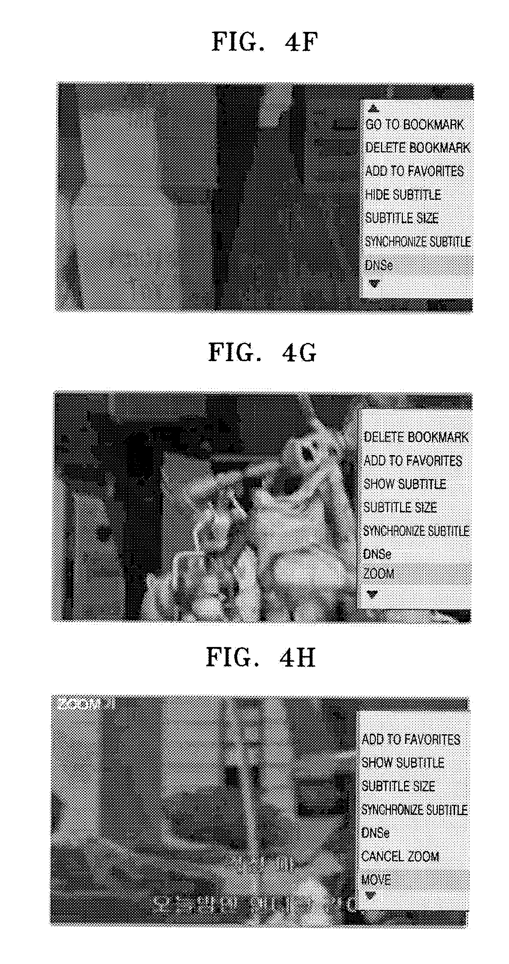

To listen to 3D sound (DNSe), in a screen shown in FIG. 4F, the up and down buttons 22 and 24 are pressed to select the <DNSe> option, and the OK button 26 is pressed to execute. Then, a DNSe setting window appears. Desired 3D sound is selected by pressing the up and down buttons 22 and 24, and the OK button 26 is pressed to execute the desired 3D sound. Selection may be, for example, made from <normal>, <3D-movie>, <3D-music>, and <3D-lecture>.

To enlarge an image, such as scene or a video, in a screen shown in FIG. 4G, the up and down buttons 22 and 24 are pressed to select the <zoom> option, and the OK button 26 is pressed to execute. Then the image is enlarged, and a moving icon appears. In this case, movement to a desired portion may be made by pressing the up, down, left, and right buttons 22, 23, 24, and 25. To return to an original image size, a <cancel zoom> option is selected from the tool menu, and the OK button 26 is pressed to cancel the zoom.

To move the enlarged image, in a screen shown in FIG. 4H, the up and down buttons 22 and 24 are pressed to select a <move> option, and the OK button 26 is pressed to execute. Movement to a desired portion may be made by pressing up, down, left, and right buttons 22, 23, 24, and 25.

To select a screen size, in a screen shown in FIG. 41, the up and down buttons 22 and 24 are pressed to select the <screen size> option, and the OK button 26 is pressed to execute. Then, a screen size setting icon appears and the up and down buttons 22 and 24 are pressed to select a desired screen size. If an <actual size> option is selected, a video file can be viewed in its actual size. If a <zoom> option is selected, the video file is viewed in a size that fits the screen display or is zoomed in or out.

To capture a scene while video is played back, in a screen shown in FIG. 4J, the up and down buttons 22 and 24 are pressed to select a <capture> option, and the OK button 26 is pressed to begin the video capture. A file of the captured scene is stored in, for example, a <captured> folder.

The tool menu provides functions to add and delete video, music, photo, and text to/from a favorites list and/or folder. For example, in the video mode, the function to add video to favorites is performed by pressing the tool button 19 while video is played back. Then, a tool menu appears. In a screen shown in FIG. 4K, the up and down buttons 22 and 24 are pressed to select an <add to favorites> option, and the OK button 26 is pressed to execute the adding of the video to the favorites. Then, for example, a phrase, "add to favorites" appears along with an indication (e.g. an asterisk mark), and the video is added to favorites. Alternatively, a desired file to be added to favorites is selected from among a list of files organized by, for example, a date order, a name order, and a data order, and the tool button 19 is pressed. Then, a tool menu appears in a screen shown in FIG. 4L. In this case, if the <add to favorites> option is selected by using the up and down buttons 22 and 24, and the OK button 26 is pressed, then an asterisk mark appears, for example, at the right of a file name, and the file is added to favorites. To delete the file from favorites, a <delete from favorites> option is selected from the tool menu, and the OK button 26 is pressed to delete. Then, for example, the asterisk mark disappears, and the video is deleted from favorites.

Further, the tool menu provides a bookmark function which is used to bookmark video, music, and text. To add a bookmark to video, for example, the tool button 19 is pressed while video is played back. Then, a tool menu appears in a screen shown in FIG. 4M. The up and down buttons 22 and 24 are pressed to select an <add bookmark> option, and the OK button 26 is pressed to add the bookmark. Then, a bookmark is set at a point where video is currently played back or paused. It is understood that according to other aspects, the bookmark is set to the beginning of the video. After the tool button 19 is pressed while the video is played back, if the tool menu shown in FIG. 4N appears, the up and down buttons 22 and 24 are pressed to select a <go to bookmark> option or a <delete bookmark> option, and the OK button 26 is pressed, thereby moving to the bookmark. After the left and right buttons 23 and 25 are pressed to select the <go to bookmark> option or the <delete bookmark> option, and the OK button 26 is selected, then movement is made to the selected bookmark to be played back or deleted.

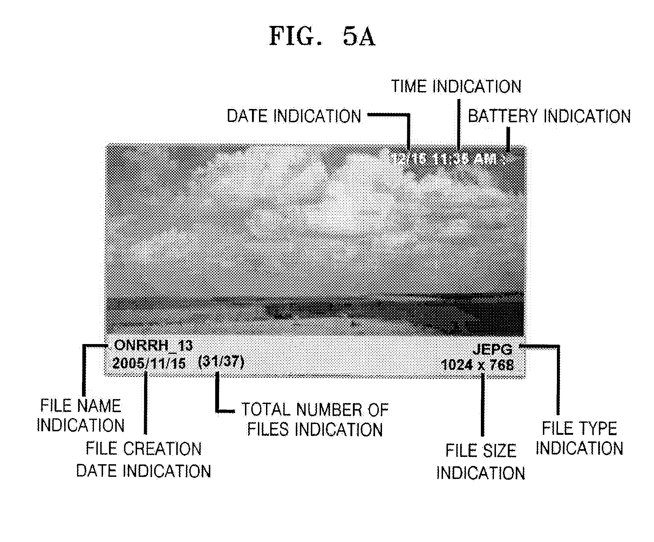

FIGs. 5A to 5H illustrate screens provided by a digital multimedia player operating in a photo mode according to an embodiment of the present invention. The photo menu includes a <favorites> option in which files added to <favorites> are checked, a <new item> option in which a latest imported file is checked, a <resume> option in which photos are viewed starting from a point where photo viewing was previously stopped, a <name order> option in which file names are displayed after being sorted in numerical order, an alphabetical order, Korean alphabetical order, etc, and a <date order> option in which the file names are displayed after being sorted in the order of file creation date.

An operation to view a photo, according to an aspect of the present invention, will now be described. The up and down buttons 22 and 24 are pressed to select the <photo> option, and the OK button 26 is pressed to execute. Then, a photo menu appears. The up and down buttons 22 and 24 are pressed to select a desired item, and the OK button 26 is pressed to execute the selected item. If folders appear, a desired folder is selected by pressing the up and down buttons 22 and 24, and the OK button 26 is pressed to open the selected folder. The up and down buttons 22 and 24 are pressed to select a desired photo file, and the OK button 26 is pressed to open the selected photo, which appears on a screen. To view a previous or next image, the left button 23 or the right button 25 is pressed.

To view photo information, the OK button 26 is pressed while viewing a photo. As shown in a screen of FIG. 5A, photo information appears temporarily at one portion of the screen before disappearing automatically. The photo information includes a file name, a file creation date, the number of total files, a file size, and a file type.

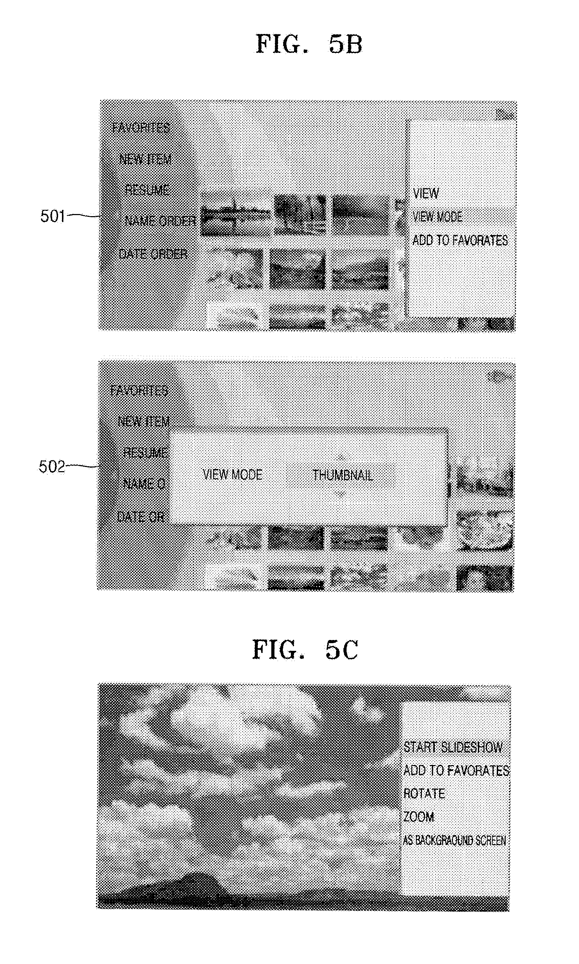

An operation to use a photo tool menu, according to an aspect of the present invention, will now be described. To preview a photo file, a file to be previewed is first selected using one of a <new item> option, a <name order> option, or a <date order> option. The tool menu 19 is pressed to view a tool menu. As shown in a screen 501 of FIG. 5B, the up and down buttons 22 and 24 are pressed to select a <view mode> option, and the OK button 26 is pressed to execute. Then, a view mode setting window appears. As shown in a screen 502 of FIG. 5B, the up and down buttons 22 and 24 are pressed to select a <thumbnail> option, and the OK button 26 is pressed to execute. Then, if an image file, such as a JPG file, contains thumbnail information, the file is viewed in the form of a thumbnail image.

To view a slideshow, the tool button 19 is pressed while viewing a photo. As shown in FIG. 5C, when a tool menu appears, the up and down buttons 22 and 24 are pressed to select a <start slideshow> option, and the OK button 26 is pressed to start the slideshow.

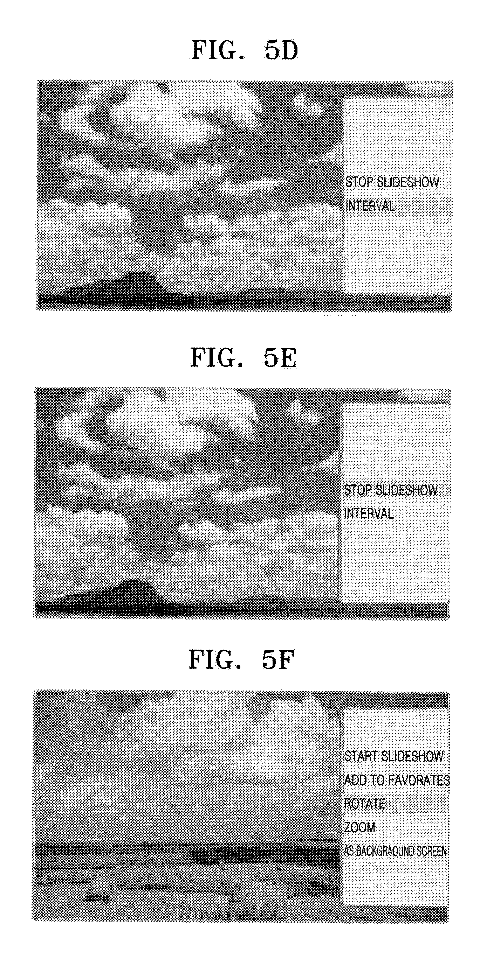

To control an interval of the slideshow, the tool button 19 is pressed during a slideshow. As shown in FIG. 5D, the up and down buttons 22 and 24 are pressed to select an <interval> option, and the OK button 26 is pressed to execute. Then, an interval setting window appears. The up and down buttons 22 and 24 are pressed to select a desired interval, and the OK button 26 is pressed to execute the desired interval. Then, the slideshow is shown with an interval selected from <10 sec>, <5 sec>, and <3 sec>. It is understood that, according to other aspects, different, more, or less interval options are provided.

To stop the slideshow, the tool button 19 is pressed while viewing the slideshow. When the tool menu appears, in a screen shown in FIG. 5E, the up and down buttons 22 and 24 are pressed so as to select a <stop slideshow> option, and the OK button 26 is pressed to stop the slideshow.

To rotate a photo, the tool button 19 is pressed while viewing the photo. In a screen shown in FIG. 5F, the up and down buttons 22 and 24 are pressed to select a <rotate> option, and the OK button 26 is pressed to rotate. Then, a screen setting icon appears. The up and down buttons 22 and 24 are pressed to select a desired rotation angle. If the angle of an original photo is defined as 0°, the original photo may be rotated by 90°, -90°, and -180°. It is understood that, according to other aspects, different, more, or less rotation angle options are provided.

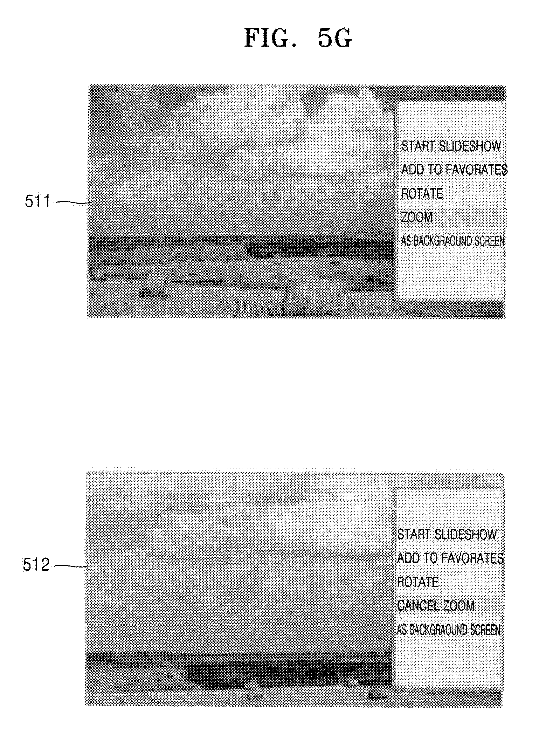

To enlarge a photo, the tool button 19 is pressed while viewing the photo. In a screen similar to the screen 511 of FIG. 5G, the up and down buttons 22 and 24 are pressed to select a <zoom> option, and the OK button 26 is pressed enlarge the photo. The photo can be moved in a desired direction by using, for example, the up, down, left, and right buttons 22, 23, 24, and 25. As shown in the screen 512 of FIG. 5G, if a <cancel zoom> option is selected, and the OK button 26 is pressed, then the zoom is canceled. Thus, the photo returns to its original size.

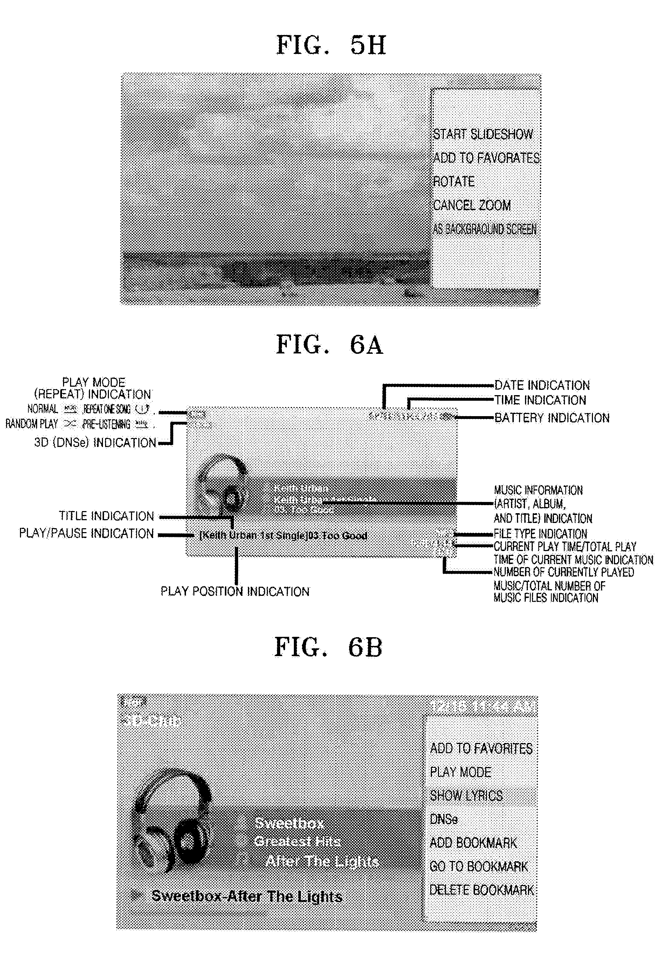

To designate a photo as a background screen, the photo to be designated as the background screen is selected, and the OK button 26 is pressed to open the photo. When the tool button 19 is pressed while viewing the photo, a tool menu appears. In a screen shown in FIG. 5H, the up and down buttons 22 and 24 are pressed to select an <as background scene> option, and the OK button 26 is pressed to set the selected photo as the background screen.

FIGs. 6A to 6E illustrate screens provided by a digital multimedia player operating in a music mode according to an embodiment of the present invention. The music menu includes, for example, a <favorites> option in which files added to a <favorites> folder or list are displayed, a <new item> option in which a latest imported file is displayed, a <resume> option in which music is played back starting from a point where music playing was previously stopped, an <artist> option in which music files can be selected on the basis of artists, an <album> option in which music files can be selected on the basis of music albums, a <track> option in which all music files are displayed in numerical order, alphabetical order, or Korean alphabetical order, a <genre> option in which music files can be selected on the basis of music genre, and a <playlist> option in which music files contained in a playlist are displayed.

An operation to listen to music stored locally, according to an aspect of the present invention, will now be described. The up and down buttons 22 and 24 are pressed to select a <music> option, and the OK button 26 is pressed to display a music menu. The up and down buttons 22 and 24 are pressed to select a desired item, and the OK button 26 is pressed to execute. If folders appear, a desired folder is selected by pressing the up and down buttons 22 and 24, and the OK button 26 is pressed to open the selected folder. The music file to be played back is selected by pressing the up and down buttons 22 and 24, and the OK button 26 is pressed to playback the music file.

As shown in FIG. 6A, a music playback screen includes a play mode indication, a 3D (DMSe) indication, a title indication, a play/pause indication, a play position indication, a music information (artist, album, and title) indication, a file type indication, a current play time out of a total play time of current music indication, and a number of a currently played music file out of a total number of music files indication.

To pause music, the play/pause button 15 or the OK button 26 is pressed while the music is played back. Each time the user selects the play/pause button 15 or the OK button 26, the music is temporarily stopped or played back again.

To find a desired position in the music file, the left button 23 or the right button 25 is pressed and held down. Then, a forward or rewind movement is made through the music file. When the button is released at a desired position, the music is played back starting from that position. To playback a current music file from the beginning, the move button 23 can be pressed and released quickly. To playback a previous or next music file, the left button 23 or the right button 25 is pressed and released quickly and a previous or next track is opened, and music is played back.

At a first position of music or voice to be repeatedly listened to, when the A↔B button 32 is pressed and released quickly while a music/voice file is played back, "A↔," for example, is displayed in the screen display. Thus, a time point is determined where section repetition begins. When the A↔B button is pressed and released quickly at a time point where the section repetition ends, "A↔B," for example, is displayed in the screen display. Thus, the determined section is repeatedly played back. The A↔B button 32 is pressed and released quickly again to cancel section repetition.

An operation to listen to music on a playlist, according to an aspect of the present invention, will now be described. The tool button 19 is pressed while music is played back or paused to display a tool menu. The up and down buttons 22 and 24 are pressed to select a <playlist> option, and the OK button 26 is pressed to open a playlist. The up and down buttons 22 and 24 are pressed to select a music file in the playlist to be played back, and the OK button 26 is pressed to playback the selected music file.

An operation to use a music tool menu, according to an aspect of the present invention, will now be described. To use a music tool menu, the tool button 19 is first pressed while music is played back. Then, a tool menu is displayed.

To show lyrics, as shown in FIG. 6B, the up and down buttons 22 and 24 are pressed to select a <show lyrics> option, and the OK button 26 is pressed to display the lyrics. A <hide lyrics> option of the tool menu is selected, and the OK button 26 is pressed to make the lyrics disappear.

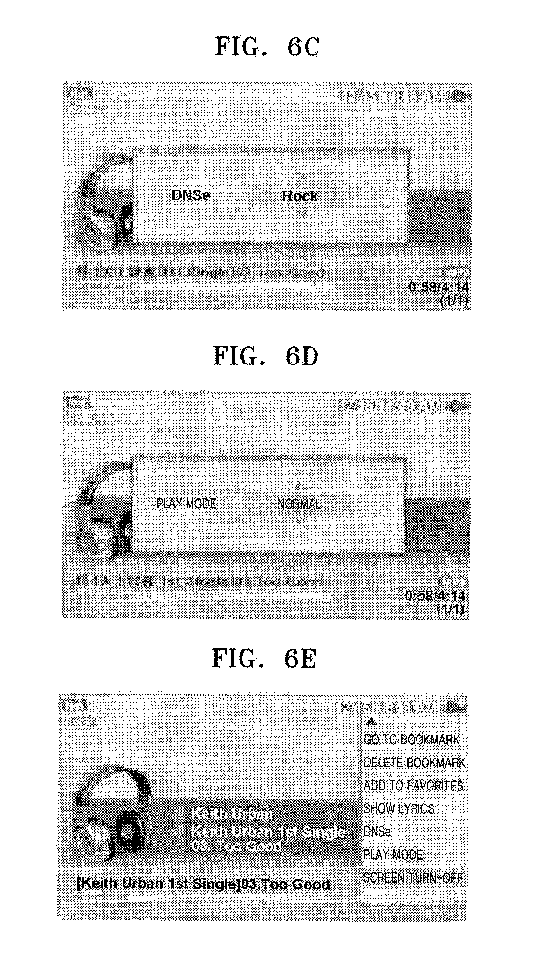

To listen to 3D music, as shown in FIG. 6C, the up and down buttons 22 and 24 are pressed to select a <DNSe> option, and the OK button 26 is pressed to execute. When a DNSe setting menu appears, the up and down buttons 22 and 24 are pressed to select desired 3D music, and the OK button 26 is pressed to execute. Selection may be made, for example, from a <3D-user> option, a <3D-studio> option, a <3D-surround> option, a <3D-stage> option, a <3D-club> option, a <general> option, a <rock> option, a <house> option, a <dance> option, a <jazz> option, a <ballade> option, an <R&B> option, a <classical> option, and a <user EQ> option. According to other aspects, more, less, or different 3D music options may be provided.

To use a play mode, as shown in FIG. 6D, the up and down buttons 22 and 24 are pressed to select a <play mode> option, and the OK button 26 is pressed to display a play mode setting menu. A desired play mode is selected from a <normal> option, a <repeat one song> option, a <random play> option, and a <pre-listening> option by pressing the up and down buttons 22 and 24. According to other aspects, more, less, or different play modes may be provided.

To reduce power consumption, the screen display is turned off while music is listened to. As shown in FIG. 6E, the up and down buttons 22 and 24 are pressed to select a <screen turn-off> option, and the OK button 26 is pressed to turn off the screen display.

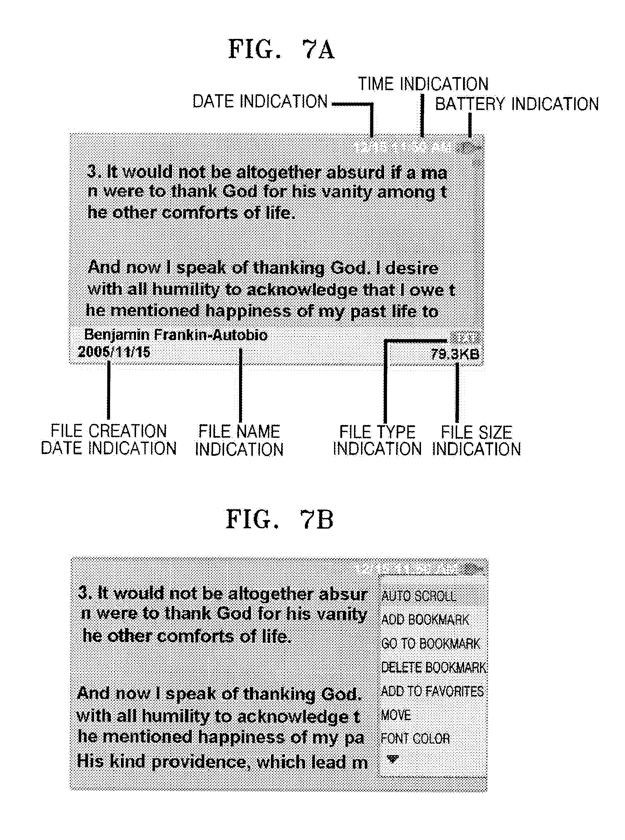

FIGs. 7A to 7E illustrate screens provided by a digital multimedia player operating in a text mode according to an embodiment of the present invention. A text menu may include a <favorites> option in which files added to a <favorites> list or folder are checked, a <new item> option in which a latest imported file is checked, a <resume> option in which a text is viewed starting from a point where text viewing was previously stopped, a <name order> option in which file names are displayed after being sorted in numerical order, alphabetical order, Korean alphabetical order, etc, and a <data order> option in which the file names are displayed after being sorted in the order of file creation date.

An operation to view text, according to an aspect of the present invention, will now be described. The up and down buttons 22 and 24 are pressed to select a <text> option, and the OK button 26 is pressed to display a text menu. The up and down buttons 22 and 24 are pressed to select a desired item, and the OK button 26 is pressed to execute. If folders appear, a desired folder is selected by pressing the up and down buttons 22 and 24, and the OK button 26 is pressed to open the selected folder. The up and down buttons 22 and 24 are pressed to select the desired text file, and the OK button 26 is pressed to open the selected text file. Then, a text appears on a screen.

To view a previous or next page, the left button 23 or the right button 25 is pressed. To scroll up or down through the text, the up button 22 or the down button 24 is pressed. According to an aspect, when one of the up and down buttons 22 and 24 is pressed and released quickly, the text scrolls up or down by one line, and when one of the buttons is pressed and held down, the text scrolls up and down quickly.

To view text information, the OK button 26 is pressed while viewing a text. Then, in a screen shown in FIG. 7A, text information appears at one portion of the screen before disappearing automatically. The text information includes a file name, a file creation date, a file type, and a file size.

An operation to use a text tool menu, according to an aspect of the present invention, will now be described. To directly go to a page, the tool button 19 is pressed while viewing a text. When a tool menu appears, the up and down buttons 22 and 24 are pressed to select a <go to page> option, and the OK button 26 is selected to display a go-to-page setting window. The up and down buttons 22 and 24 are pressed to select a desired page, and the OK button 26 is pressed 26, thereby directly moving to the selected page.

To set an auto scroll, the tool button 19 is pressed while viewing a text. In a tool menu of a screen shown in FIG. 7B, the up and down buttons 22 and 24 are pressed to select an <auto scroll> option, and the OK button 26 is pressed to display an auto scroll setting window. The up and down buttons 22 and 24 are pressed to select an automatic scroll interval. The auto scroll interval may be selected from <1 sec>, <3 sec>, <5 sec>, and <10 sec>. However, it is understood that according to other aspects, more, less, or different intervals are provided. The auto scroll is not performed when <off> is selected.

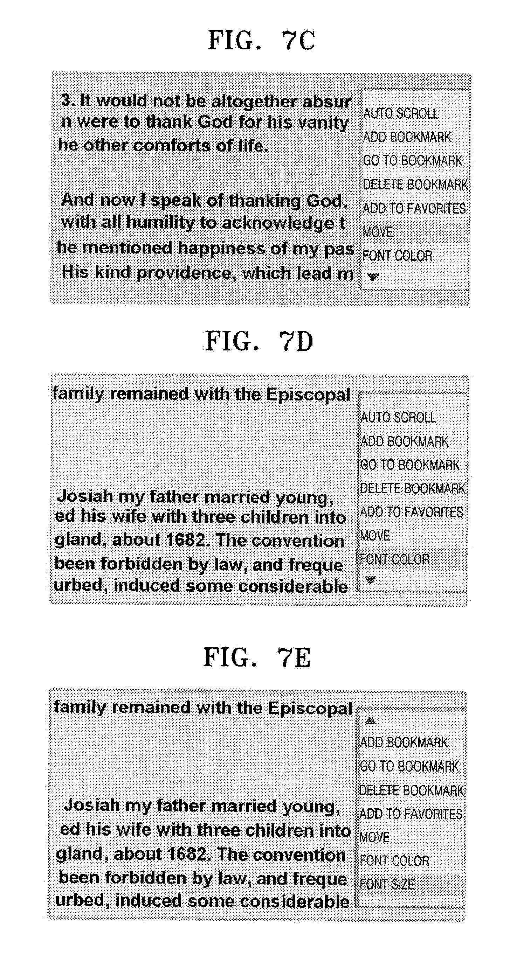

To set a text movement interval, in a tool menu of a screen shown in FIG. 7C, the up and down buttons 22 and 24 are pressed to select a <move> option, and the OK button 26 is pressed to display a move setting window. The up and down buttons 22 and 24 are pressed to select a movement interval.

To change the background color of a font, in a tool menu of a screen shown in FIG. 7D, the up and down buttons 22 and 24 are pressed to select a <font color> option, and the OK button 26 is pressed to display a font color setting window. The up and down buttons 22 and 24 are pressed to select a desired background color of a font.

To select a font size, in a tool menu of a screen shown in FIG. 7E, the up and down buttons 22 and 24 are pressed to select a <font size> option, and the OK button 26 is pressed to display a font size setting window. The up and down buttons 22 and 24 are pressed to select a font size.

According to an aspect of the present invention, a game is provided in a game mode in which the game is played back. In the setting mode, settings can be made for, for example, screen, sound, music, video, recording, battery management, system environment, and list reconfiguration. For a list reconfiguration, the up and down buttons 22 and 24 are pressed to select a <setting> option, and the OK button 26 is pressed to display a setting menu. The up and down buttons 22 and 24 are pressed to select a <list reconfiguration> option, and the OK button 26 is pressed to display a list reconfiguration setting screen. A desired function may be selected to be set. A <list selection> option is used to determine whether to use a video item, a music item, a photo item, or a text item. Selection may be made between an <on> option and an <off> option. In a <start reconfiguration> option, a file from the video, music, photo, and text items appears only when reconfiguration starts after a new file is imported.

The digital multimedia player, according to aspects of the present invention, provides a file browser mode in which all files can be viewed at once on the basis of folders. The up and down buttons 22 and 24 are pressed to select a <file browse> option, and the OK button 26 is pressed to display a file browser screen. The up and down buttons 22 and 24 are pressed to select a memory to be used, and the OK button 26 is pressed to display a folder list on the basis of memories.

For example, when a <YM-PD1 HDD> option is selected, which indicates a hard disk (HDD) driver of the digital multimedia player, a folder list including a <movie> option, a <music> option, a <photo> option, a <text> option, a <game> option, a <recorded> option, an <imported> option, a <captured> option, a <playlist> option, a <fonts> option, and a <system> option appears. If a <secure digital (SD)/multimedia card (MMC)> option is selected, a folder or file list stored in a memory card inserted into the digital multimedia player appears. When a desired folder or file is selected by using the up and down buttons 22 and 24, the selected file is played back or displayed. To return to a file browser list, the back button 16 is pressed. It is understood that, according to other aspects, other flash memory cards may be used, such as a transflash card or a miniSD card.

An operation to import files from a memory card or external device, according to an aspect of the present invention, will now be described. First, a memory card is inserted into the digital multimedia player or is connected to an external device by using, for example, a USB host adaptor. According to other aspects, other methods, such as wireless connections (Bluetooth, infrared, etc), are provided to connect the digital multimedia player to an external device. The digital multimedia player is turned on, and the TV/LCD switch is adjusted to LCD.

In a file browser screen, the up and down buttons 22 and 24 are pressed to select, for example, an <SD/MMC> option, which represents a SD/MMC card, and a <USB Host> option, which represents an external device connected to a USB port of the digital multimedia player, and the OK button 26 is pressed to display a file browser screen of a memory card or external device. The up and down buttons 22 and 24 are pressed to select a desired folder or file, and the tool button 19 is pressed to display a tool menu. The up and down buttons 22 and 24 are pressed to select an <imported> option, and the OK button 26 is pressed to execute. Then, the selected file is transmitted to the internal HDD (YM-PD1 HDD) of the digital multimedia player. The transmitted file can be checked in an <imported> folder.

An operation to transmit a file to a memory card, according to an aspect of the present invention, will now be described. In a file browser screen, the up and down buttons 22 and 24 are pressed to select a <YM-PD1 HDD> option, and the OK button 26 is pressed to display a file browser screen of the YM-PD1 HDD. The up and down buttons 22 and 24 are pressed to select a desired folder or file, and the tool button 19 is pressed to display a tool menu. The up and down buttons 22 and 24 are pressed to select an <exported> option, and the OK button 26 is pressed to execute. Then, the left and right buttons 23 and 25 are pressed to select a <SD/MMC> option or a <USB Host> option, and the OK button 26 is pressed to transmit the selected file to the memory card or the external device.

An operation to delete a file, according to an aspect of the present invention, will now be described. In a file browser screen, the up and down buttons 22 and 24 are pressed to select a desired memory, and the OK button 26 is pressed to display a file browser screen of the selected memory. The up and down buttons 22 and 24 are pressed to select a desired folder or file, and the tool button 19 is pressed to display a tool menu. The up and down buttons 22 and 24 are pressed to select a <delete> option, and the OK button 26 is pressed to delete the selected file.

Meanwhile, to use a multimedia function, a <start reconfiguration> option has to be set after the desired file is imported. The up and down buttons 22 and 24 are pressed to select a <setting> option, and the OK button 26 is pressed to display a setting menu. When the up and down buttons 22 and 24 are pressed to select a <list reconfiguration> option, a list reconfiguration setting screen appears. The up and down buttons 22 and 24 are pressed to select a <start reconfiguration> option, and the OK button 26 is pressed to execute. Then, a start-reconfiguration checking window appears. The left or right button 23 or 25 is pressed to select a <yes> option, and the OK button 26 is pressed to execute. If the <yes> option is selected, a file list is reconfigured, and a user is prompted to reboot the digital multimedia player. When the OK button 26 is pressed, a reboot is performed (power is turned off and then on again). Thereafter, a file can be checked from a <favorites> option, a <new item> option, and a <resume> option included in the video, music, photo, and text menus. Further, a multimedia function can be used.

In addition to the aforementioned functions, the digital multimedia player can record DMB content and voice, video, and music of an external device by using a REC button (an audio/video recording button) 32. As for a file name stored when recorded, the file name is automatically designated in the format of "XXXX_yyyymmddnnn". In this case, "XXXX" denotes a recording type, "yyyy" denotes a year, "mm" denotes a month, "dd" denotes a date, and "nnn" denotes a recording number. The recording type may be denoted as "Dmb" for DMB, "Voice" for voice, and "Line" for a file of an external device recorded using a cable.

To record DMB content, the user presses and holds the REC button 32 while watching the DMB. Then, a stored file name is displayed on the screen display of the digital multimedia player and recording begins. When recording is finished, if the REC button 32 is pressed again, a recording content checking window appears through which a <yes> option or a <no> option is selected. If the left or right button 23 or 25 is pressed to select a <yes> option, and the OK button 26 is pressed, then a most recently recorded file is played back. If a <no> option is selected, and the OK button 26 is pressed, then a playback of the recording is cancelled. The recorded file is automatically stored in a <recorded> folder. When the memory becomes full during recording, recording is automatically stopped.

In addition, according to an aspect of the present invention, the digital multimedia player can record voice. When the user presses and holds down the REC button 32, a recording mode appears. The up and down buttons 22 and 24 are pressed to select a <voice recording> option, and the OK button 26 is pressed. When a stored file name appears, voice recording begins. To finish the recording, the REC button 32 is pressed again. Then, a recording content checking window appears through which a <yes> option or a <no> option is selected. The left or right button 23 or 25 is pressed to select the <yes> option, and the OK button 26 is pressed to playback a most recently recorded file. If the <no> option is selected, and the OK button 26 is pressed, the record is not played back. The recorded file is automatically stored in the <recorded> folder.

In addition, according to an aspect of the present invention, the digital multimedia player may be connected to an external device. Thus, without having to use a personal computer (PC), the digital multimedia player may be directly connected to an external device such as a cassette, a compact disk (CD) player, or a camcorder, to perform audio/video recording. The digital multimedia player is connected to the external device by using, for example, a line-in cable. However, it is understood that according to other aspects, a wireless connection, such as Bluetooth or infrared, may be used. One end of the line-in cable is connected to a line-in connection terminal 31 of the digital multimedia player, and the other end of the line-in cable is connected to an output jack (where an earphone is plugged in). When contents provided by the external device are played back, audio/video recording can be carried out by pressing and holding the REC button 32 using the aforementioned audio/video recording method.

A user interface to record audio using a cassette or a CD player will now be described. First, an audio device is turned on, and music to be recorded is played back. To begin a recording mode, the REC button 32 of the digital multimedia player is pressed and held down. The up and down buttons 22 and 24 are pressed to select an <audio input recording> option, and the OK button 26 is pressed to display a stored file name and begin audio recording. The operation of finishing the audio recording is the same as described above.

A user interface to record video using a camcorder will now be described. First, a video device is turned on, and a scene to be recorded is played back. To begin a recording mode, the REC button 32 of the digital multimedia player is pressed and held down. The up and down buttons 22 and 24 are pressed to select a <video input recording> option, and the OK button 26 is pressed to display a stored file name and begin video recording. The operation of finishing the video recording is the same as described above.

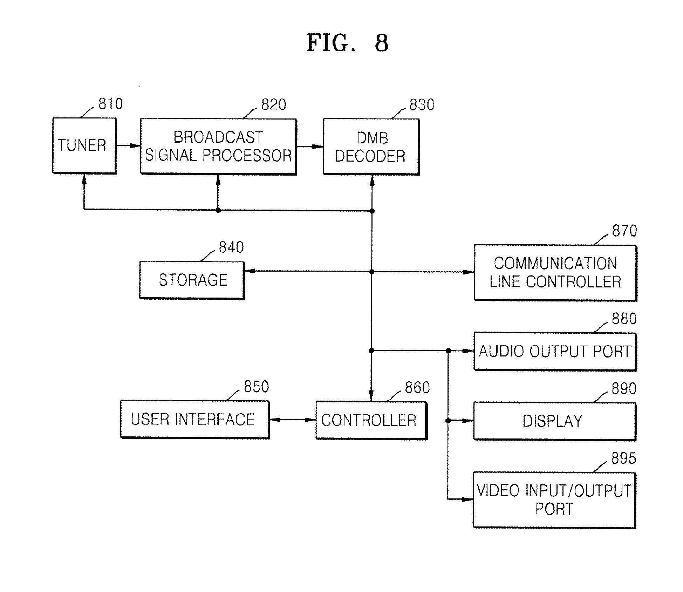

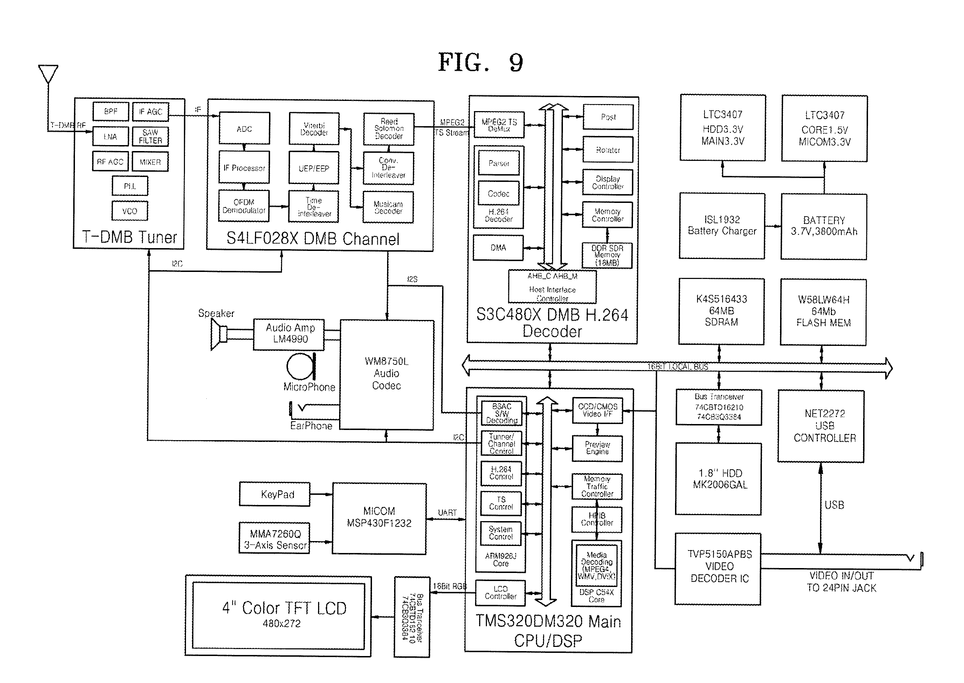

FIG. 8 is a block diagram illustrating an inner structure of a digital multimedia player according to an embodiment of the present invention. FIG. 9 is a block diagram illustrating the structure of the digital multimedia player of FIG. 8 in greater detail. Referring to FIGs. 8 and 9, the structure of the digital multimedia player will now be described.

The digital multimedia player includes a tuner 810 that outputs a digital broadcast signal transmitted through a digital broadcast channel; a broadcast signal processor 820 that outputs a broadcasting service selected by a user from a plurality of broadcasting services contained in the digital broadcast signal; a decoder 830 that decodes the output broadcasting service; a storage 840 that stores information on a broadcast channel list; a user interface 850 that includes a key pad, wherein a user input signal is input through the user interface 850 and the user input signal is transmitted from the user interface 850 to a controller 870; a display 890 that outputs a decoded video signal output from the decoder 830; and a controller 860 that controls the tuner 810, the broadcast signal processor 820, the decoder 830, the storage 840, the user interface 850, and the display 890. In addition, the digital multimedia player further includes a communication line controller 870, an audio output port 880, and a video input/output port 895.

The tuner 810, which is depicted as a block indicated by a T-DMB Tuner of FIG. 9, includes a band pass filter (BPF), a low noise amplifier (LNA), an RF auto gain control (AGC), a mixer, a surface acoustic wave (SAW) filter, an intermediate frequency (IF) AGC, a phase locked loop (PLL), and a voltage controlled oscillator (VCO). The BPF passes only a bandwidth of band III (174MHz~240MHz) whereby a ground wave DMB is transmitted. The BPF blocks a signal that lies outside the band which may play a role as a noise source in the process of signal amplification and modification. The LNA amplifies a small signal received through an antenna and has a noise value of approximately 1.5dB. The RF AGC determines a dynamic range of a signal that can be received by a circuit block that detects an intensity of a received RF signal so as to maintain the magnitude of a signal input to a mixer at a constant level. The mixer performs down-mixing only on a desired channel selected from the received RF band into an IF. The PLL is controlled by an external processor. Accordingly, a frequency of a local oscillator is controlled, thereby selecting a channel.

The SAW filter has a center frequency of 383.912 MHz and a bandwidth of 1.5 MHz. The SAW filter is an anti-aliasing filter for the IF signal, which is input to an A/D converter. The IF AGC detects an intensity of an IF signal so as to maintain the magnitude of the IF signal input to the A/D converter at a constant level. The IF AGC controls the gain of the IF amplifier.

The broadcast signal processor 820, which is depicted as a block indicated by a DMB channel of FIG. 9, includes an analog-digital converter (ADC), an IF processor, an orthogonal frequency division multiplexing (OFDM) demodulator, a time de-interleaver performing unequal error protection (UEP) and equal error protection (EEP), a Viterbi decoder, a musicam decoder, a conv. de-interleaver, and a Reed-Solomon decoder. The ADC converts an IF signal of 38.912 MHz into a digital signal. The ADC is an under-sampling type ADC that uses a sampling frequency of 8.192 MHz. The under-sampling of the ADC achieves down mixing, which converts an input signal to have a center frequency of 2.0248 MHz. In this case, the phase of a signal is inverted. In order for the ADC to perform the under-sampling, an anti-aliasing filter (SAW filter) has to be used at an input side.

The IF processor allows an IF signal (center frequency: 2.048MHz) digitalized through the under-sampling to be subjected to digital signal processing. The IF processor performs down-mixing to convert the signal into a HPF, a BPF, and a base band. Further, the IF processor removes distortion (e.g. phase shift) occurring in a received OFDM type DMB signal. The OFDM demodulator demodulates a signal modulated by using an OFDM method. The OFDM outputs a fast information channel (FIC) and a main service channel (MSC) from a OFDM frame. The time de-interleaver performs de-scrambling of a time scrambled signal that is used to enhance error correction efficiency for the MSC. Thereafter, the time de-interleaver performs the UEP or the EEP for each sub-channel. The Viterbi decoder performs Viterbi decoding that is convolutionary error correction coding. The conv. de-interleaver and the Reed-Solomon decoder perform RS decoding used in a DMB service. When the DAB service is used, the musicam decoder performs musicam decoding of a layer II in MPEG 1 and 2, which is a source coding method used by DAB.

The DMB decoder 830, which is depicted as a DMB H.264 decoder block in FIG. 9, includes a H.264 decoder, a direct memory access (DMA), a post, a rotator, a display controller, a memory controller, and a DDR SDR memory. The H.264 decoder includes an MPEG2 TS demux, a parser, and a codec. The MPEG2 TS demux demultiplexes an MPEG2 TS stream received from the broadcast signal processor 820. The MPEG2 TS demux transmits an audio source compressed with BSAC to the controller 860 and transmits a video source compressed with H.264 to the H.264 decoder.

The H.264 decoder decodes a H.264 video source which is DMB video. The parser included in the H.264 decoder parses FIC data received with a period of 24ms and transmits multiplex configuration information (MCI) and service information (SI) to a central processing unit (CPU). The DMA is used to transmit the MCI and SI, which are FIC data, and the BSAC data, which is a DMB audio source, to the CPU. The post allows DMB video to be subjected to post processing. The rotator allows the DMB video to be subjected to rotator processing.

The storage 840 stores program information required to control a system of the digital multimedia player along with digital multimedia contents. The storage 840 may comprise one or more of an electrically-erasable programmable read-only memory (EEPROM), a flash memory, and a static random-access memory (SDRAM). Further, the storage 840 stores information on a broadcast channel list. The information on the broadcast channel list may be pre-stored. Further, analysis information, whereby the FIC information is analyzed through the broadcasting processor 820 and the DMB decoder 830, may be stored in the storage 840. The information on the broadcast channel list may include broadcast channel information, service information contained in the broadcast channel, and service type information. The EEPROM stores information (e.g. setting information) that needs to be remembered even after power is turned off. The flash memory stores a program to control the DMB decoder 830 along with multimedia contents. The SDRAM is a storage in which various data is temporarily backed up. To upgrade a program to control a system, an upgrade program may be stored in the flash memory after being downloaded from an external device connected through a communication line.

The user interface 850 includes a key pad of FIG. 9. It is understood that according to other aspects, the user interface may include a touch screen of the screen display. A user input signal is input through the user interface 850 and then transmitted to the controller 860.

The controller 860, which is depicted as a main CPU/DSP block of FIG. 9, includes a BASC S/W decoder, a tuner/channel controller, an H.264 controller, a TS controller, a system controller, a CCD/CMOS video I/F, an LCD controller, a preview engine, a memory traffic controller, and a media decoder. The BSAC S/W decoder decodes a BASC audio source transmitted from the DMB decoder 830 using software. The tuner/channel controller controls the tuner 810 and the broadcast signal processor 820 using an I2C communication method with reference to the MCI and the SI transmitted from the DMB decoder 830. The H.264 controller controls the H.264 decoder. The TS controller controls the MPEG2 TS demux. The system controller controls the overall operation of the digital multimedia player of FIG. 9.

The CCD/CMOS video IF receives video data transmitted from the H.264 decoder block to the CPU through the CCD interface. The preview engine regulates a screen size so as to display video data received by the CCD/video IF on the display 890. For a DMB signal, the post serves the same purpose as the preview engine. The multimedia decoder decodes MPEG-4, WMV, and DVIX files. The LCD controller controls the display 890.

The communication line controller 870 includes the USB controller of FIG. 9 and controls a USB device connected through a communication line such as a USB.

The audio output port 880 includes a WM8750 audio codec and an audio amp. The WN8750 audio codec receives a pulse code modulation (PCM) audio signal generated when musicam decoding is performed by the broadcast signal processor 820 using the I2S method. The received signal is then subjected to volume control, and a D/A converter is used to generate an analog signal. The audio amp amplifies an input analog audio signal. The display 890 outputs a video signal decoded under the control of the controller 860. The video input/output port 895 transmits and receives multimedia contents to and from an external device connected through a line-in cable or the like.

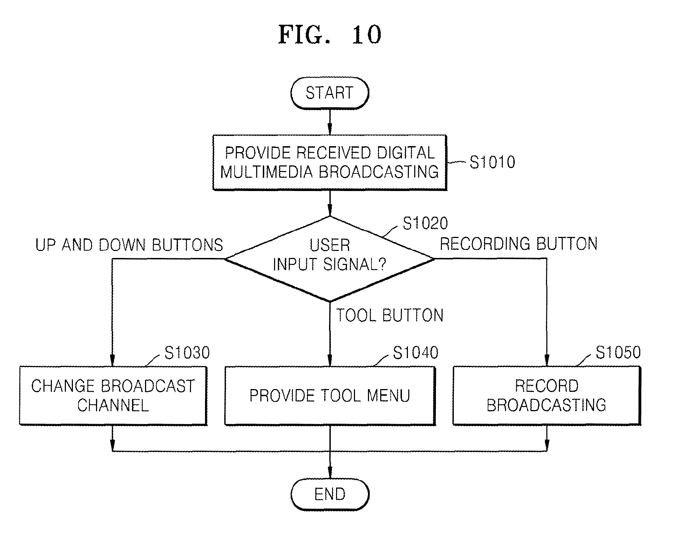

FIG. 10 is a flowchart illustrating a method of providing DMB according to an embodiment of the present invention. The method of providing DMB performed in the digital multimedia player of FIG. 8 will now be described.

The user presses a button provided in the user interface 850 so as to operate the digital multimedia player in an operation mode in which DMB channels are automatically searched for to be watched. Then, the user input signal, input through the button, is transmitted to the controller 860. The controller 860 analyses the user input signal. The controller 860 controls the tuner 810, the broadcast signal processor 820, and the DMB decoder 830 based on the analysis of the user input signal so as to output a received and processed broadcast signal to the display 890, thereby providing received DMB (operation S1010).

If the user input signal is input through the user interface 850 while the DMB is received, the controller 860 analyzes the user input signal (operation S1020).

When the user input signal is input through the up and down buttons 22 and 24 of the user interface 850, the controller 860 outputs broadcast channel information that can be received and provided by the digital multimedia player to the display 890, thereby providing the information to the user. The controller 860 may read information on a broadcast channel list stored in the storage 840 to provide the broadcast channel information. When a broadcast channel selection signal is input through the user interface 850, the controller 860 may control the tuner 810 to change a broadcast channel so as to receive a broadcast signal transmitted through the selected channel. Further, the controller 860 may control the broadcast signal processor 820 and the DMB decoder 830 to provide a broadcasting service received through the selected broadcast channel in response to the broadcast channel selection signal (operation S1030). Moreover, the controller 860 may generate and provide a message indicating a state of reception. The state of reception of the broadcast signal may be recognized using a bit error rate of a broadcast signal estimated by the Viterbi decoder of the broadcast signal processor 820.

When the user input signal is input through the tool button 19 of the user interface 850, the controller 860 provides a tool menu that can be provided in the operation mode in which DMB is automatically searched for to be watched (operation S1040). The tool menu provided by the controller 860 may include one or more items selected from a channel re-search menu through which a broadcast channel is researched to be stored; a channel mode-based search through which broadcast channel information is provided by searching video, audio, and data channels; a broadcast scene capture through which a particular broadcast scene is captured; a screen size selection through which a size of broadcast screen is selected; a channel list which provides a channel list stored in the storage 840 to change a channel; and a broadcast screen turn-off through which a screen display is turned off while broadcasting is provided.

In addition, if a signal to request one of a video channel mode in which only video channels can be searched, an audio channel mode in which only audio channels can be searched, and a data channel mode in which only data channels can be searched is input through the user interface 850, then the controller 860 searches for channel information and service information transmitted and contained in a broadcast signal received through the broadcast signal processor 820 according to a search request signal. Thus, a list of channels requested to be searched for may be provided through the display 890. Alternatively, the controller 860 may search for information contained in the broadcast channel list stored in the storage 840 and thus provide search information for each channel mode.

Meanwhile, when the user input signal is input through an audio/video record button 82, the controller 860 performs audio/video recording of broadcasting, thereby storing the broadcasting in the storage 840 (operation S1050).

Accordingly, aspects of the present invention provide a digital multimedia player that can receive and provide digital multimedia broadcasting in addition to playing back video and music, and a method of providing digital multimedia broadcasting in the digital multimedia player.

Aspects of the present invention can also be embodied as computer-readable codes on a computer-readable recording medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, optical data storage devices, and a computer data signal embodied in a carrier wave comprising a compression source code and an encryption source code segment comprising (such as data transmission through the Internet). The computer-readable recording medium can also be distributed over network coupled computer systems so that the computer-readable code is stored and executed in a distributed fashion.

Although a few embodiments of the present invention have been shown and described, it would be appreciated by those skilled in the art that changes may be made in this embodiment without departing from the scope of the invention, which is defined in the claims.

## Claims

1. A digital multimedia player comprising:
a tuner to output a digital broadcast signal transmitted through a digital broadcast channel;
a broadcast signal processor to receive the output digital broadcast signal and to output a broadcasting service selected by a user from a plurality of broadcasting services contained in the digital broadcast signal;
a decoder to receive the output broadcasting service and to decode the output broadcasting service;
a storage to store a broadcast channel list;
a user interface to transmit a user input signal, input by the user;
a display to output a decoded video signal output from the decoder; and
a controller to control the tuner, the broadcast signal processor, the decoder, the storage, the user interface, and the display so as to provide received digital multimedia broadcasting of the digital broadcast channel to the display, to receive and to analyze the user input signal transmitted by the user interface, to change the digital broadcast channel in response to the user input signal, to provide a tool menu in response to the user input signal, and to perform audio and/or video recording of the received digital multimedia broadcasting in response to the user input signal.

2. The digital multimedia player as claimed in claim 1, wherein the controller controls the display to output the broadcast channel list stored in the storage when the user inputs the user input signal requesting the broadcast channel list through the user interface.

3. The digital multimedia player as claimed in claim 1 or 2, wherein the controller controls the tuner, the broadcast signal processor, and the decoder to provide the broadcasting service received through the broadcast channel selected in a broadcast channel selection signal input by the user through the user interface.

4. The digital multimedia player as claimed in one of claims 1 to 3, wherein the controller generates and provides a message indicating a state of reception of the digital broadcast signal transmitted through the digital broadcast channel.

5. The digital multimedia player as claimed in one of claims 1 to 4, wherein the tool menu provided by the controller comprises one or more options selected through the user interface, the one or more options comprising at least one of:
a channel re-search option to re-search available broadcast channels for the broadcast channel list;
a channel mode-based search option to search available video broadcast channels in the broadcast channel list, available audio broadcast channels in the broadcast channel list, available data broadcast channels in the broadcast channel list, or a combination thereof;
a broadcast scene capture option to record the received digital multimedia broadcasting;
a screen size selection option to change a size of a broadcast screen through which the broadcast service is provided;
a channel list option to provide the broadcast channel list; and
a broadcast screen turn-off option to turn off the display.

6. The digital multimedia player as claimed in one of claims 1 to 5, wherein the user interface comprises a key pad through which the user inputs the user input signal.

7. The digital multimedia player as claimed in one of claims 1 to 6, wherein the storage comprises a memory card slot to store, on a memory card, the broadcast channel list and/or the audio and/or video recording of the received digital multimedia broadcasting.

8. The digital multimedia player as claimed in one of claims 1 to 7, wherein the controller controls a selection of an operating mode, from a plurality of operating modes, in response to the user input signal.

9. The digital multimedia player as claimed in claim 8, wherein the plurality of operating modes comprises at least one of:
a digital multimedia broadcasting mode to output the received digital multimedia broadcasting of the digital broadcasting channel;
a video mode to output a video file stored in the storage;
a photo mode to output a photo file stored in the storage;
a music mode to output an audio file stored in the storage;
a text mode to output a text file stored in the storage;
a game mode to output a game file stored in the storage; and
a file browser mode to allow the user to browse through files stored in the storage.

10. The digital multimedia player as claimed in claim 9, wherein the controller controls the display to display a video tool menu when operating in the video mode, the video tool menu comprising at least one of:
a play from beginning option to playback video from a beginning of the video file;
an add bookmark option to add a bookmark to a position of the video during which the add bookmark option is selected;
a go to bookmark option to go to the bookmark added by the add bookmark option;
a delete bookmark option to delete the bookmark added by the add bookmark option;
an add to favorites option to add the video file to a list of favorite files;
a show subtitle option to display a subtitle of the video;
a subtitle size option to select a size of the subtitle;
a DNSe option to listen to 3D sound;
a capture option to perform audio and/or video recording of the video;
a zoom option to zoom in to or out of the video; and
a move option to move a position of a video screen through which the video is broadcast on the display.

11. The digital multimedia player as claimed in claim 9 or 10, wherein the controller controls the display to display a music tool menu when operating in the music mode, the music tool menu comprising at least one of:
a show lyrics option to display lyrics of the audio file;
a DNSe option to listen to 3D sound;
a play mode option to select a play mode;
a broadcast screen turn-off option to turn off the display;
an add bookmark option to add a bookmark to a position of the audio file during which the add bookmark option is selected;
a go to bookmark option to go to the bookmark added by the add bookmark option;
a delete bookmark option to delete the bookmark added by the add bookmark option; and
an add to favorites option to add the audio file to a list of favorite files.

12. The digital multimedia player as claimed in one of claims 1 to 11, wherein the user interface comprises a record button through which the user inputs the user input signal instructing the controller to perform the audio and/or video recording of the received digital multimedia broadcasting.

13. The digital multimedia player as claimed in one of claims 1 to 12, wherein the user interface comprises a tool button through which the user inputs the user input signal instructing the controller to provide the tool menu.

14. The digital multimedia player as claimed in one of claims 1 to 13, wherein the digital multimedia player is a mobile device.

15. A digital multimedia player comprising:
a tuner to receive a digital broadcast signal of a digital audio, video, and/or data broadcast transmitted through a digital broadcast channel, and to transmit the digital broadcast signal;
a display to display a tool menu; and
a controller to receive the digital broadcast signal, to change the digital broadcast channel to another digital broadcast channel, to provide a tool menu, to output a digital multimedia broadcast of the digital broadcast signal, and to perform audio and/or video recording of the digital multimedia broadcast.

16. The digital multimedia player as claimed in claim 15, further comprising:
a broadcast signal processor to receive the digital broadcast signal from the tuner, and to output a broadcasting service selected by a user from a plurality of broadcasting services contained in the digital broadcast signal.

17. The digital multimedia player as claimed in claim 15 or 16, further comprising:
a decoder to receive the digital broadcast signal and to decode the digital broadcast signal.

18. The digital multimedia player as claimed in one of claims 15 to 17, further comprising:
a storage to store a broadcast channel list.

19. The digital multimedia player as claimed in claim 18, wherein the storage comprises a memory card slot to store, on a memory card, the broadcast channel list and/or the audio and/or video recording of the digital multimedia broadcasting.

20. The digital multimedia player as claimed in one of claims 15 to 19, further comprising:
a user interface to transmit a user input signal, input by a user, wherein the controller changes the digital broadcast channel to the other digital broadcast channel according to the user input signal, provides the tool menu according to the user input signal, and performs the audio and/or the video recording of the digital multimedia broadcast according to the user input signal.

21. The digital multimedia player as claimed in claim 20, wherein the controller controls the display to output a broadcast channel list when the user inputs the user input signal requesting the broadcast channel list through the user interface.

22. The digital multimedia player as claimed in claim 20 or 21, wherein the tool menu provided by the controller comprises one or more options selected through the user interface, the one or more options comprising at least one of:
a channel re-search option to re-search available broadcast channels for a broadcast channel list;
a channel mode-based search option to search available video broadcast channels in the broadcast channel list, available audio broadcast channels in the broadcast channel list, available data broadcast channels in the broadcast channel list, or a combination thereof;
a broadcast scene capture option to record the received digital multimedia broadcasting;
a screen size selection option to change a size of a broadcast screen through which the digital multimedia broadcasting is provided;
a channel list option to provide the broadcast channel list; and
a broadcast screen turn-off option to turn off the display.

23. The digital multimedia player as claimed in one of claims 20 to 22, wherein the controller controls a selection of an operating mode, from a plurality of operating modes, according to the user input signal.

24. The digital multimedia player as claimed in claim 23, wherein the plurality of operating modes comprises at least one of:
a digital multimedia broadcasting mode to output the digital multimedia broadcasting of the digital broadcasting channel;
a video mode to output a video file stored in a storage;
a photo mode to output a photo file stored in the storage;
a music mode to output an audio file stored in the storage;
a text mode to output a text file stored in the storage;
a game mode to output a game file stored in the storage; and
a file browser mode to allow the user to browse through files stored in the storage.

25. The digital multimedia player as claimed in claim 24, wherein the controller controls the display to display a video tool menu when operating in the video mode, the video tool menu comprising at least one of:
a play from beginning option to playback video from a beginning of the video file; an add bookmark option to add a bookmark to a position of the video during which the add bookmark option is selected;
a go to bookmark option to go to the bookmark added by the add bookmark option;
a delete bookmark option to delete the bookmark added by the add bookmark option;
an add to favorites option to add the video file to a list of favorite files;
a show subtitle option to display a subtitle of the video;
a subtitle size option to select a size of the subtitle;
a DNSe option to listen to 3D sound;
a capture option to perform audio and/or video recording of the video;
a zoom option to zoom in to or out of the video; and
a move option to move a position of a video screen through which the video is broadcast on the display.

26. The digital multimedia player as claimed in claim 24 or 25, wherein the controller controls the display to display a music tool menu when operating in the music mode, the music tool menu comprising at least one of:
a show lyrics option to display lyrics of the audio file;
a DNSe option to listen to 3D sound;
a play mode option to select a play mode;
a broadcast screen turn-off option to turn off the display;
an add bookmark option to add a bookmark to a position of the audio file during which the add bookmark option is selected;
a go to bookmark option to go to the bookmark added by the add bookmark option;
a delete bookmark option to delete the bookmark added by the add bookmark option; and
an add to favorites option to add the audio file to a list of favorite files.

27. The digital multimedia player as claimed in one of claims 20 to 26, wherein the user interface comprises a record button through which the user inputs the user input signal instructing the controller to perform the audio and/or video recording of the digital multimedia broadcasting.

28. The digital multimedia player as claimed in one of claims 20 to 27, wherein the user interface comprises a tool button through which the user inputs the user input signal instructing the controller to provide the tool menu.

29. The digital multimedia player as claimed in one of claims 15 to 28, wherein the controller generates and provides a message indicating a state of reception of the digital broadcast signal transmitted through the digital broadcast channel.

30. The digital multimedia player as claimed in one of claims 15 to 29, wherein the digital multimedia player is a mobile device.

31. A method of providing digital multimedia broadcasting, comprising:
receiving digital multimedia broadcasting through a digital broadcast signal transmitted through a digital broadcast channel;
analyzing a user input signal input through a user interface;
changing the digital broadcast channel to another digital broadcast channel; and
providing a tool menu in response to the user input signal, and/or performing audio and/or video recording of the received digital multimedia broadcasting in response to the user input signal.

32. The method as claimed in claim 31, wherein the changing of the broadcast channel comprises:
providing a broadcast channel list pre-stored in response to the user input signal.

33. The method as claimed in claim 31 or 32, wherein the changing of the broadcast channel comprises:
providing another digital broadcast signal transmitted through the other digital broadcast channel selected in response to a broadcast channel selection signal when the broadcast channel selection signal is input as the user input signal.

34. The method as claimed in one of claims 31 to 33, further comprising:
providing a message indicating a state of reception of the digital broadcast signal.

35. The method as claimed in one of claims 31 to 34, further comprising selecting an option, of one or more options provided in the tool menu, according to the user input signal, wherein the one or more options comprises at least one of:
a channel re-search option to re-search available broadcast channels for a broadcast channel list;
a channel mode-based search option to search available video broadcast channels in the broadcast channel list, available audio broadcast channels in the broadcast channel list, available data broadcast channels in the broadcast channel list, or a combination thereof;
a broadcast scene capture option to record the received digital multimedia broadcasting;
a screen size selection option to change a size of a broadcast screen through which the digital multimedia broadcasting is provided;
a channel list option to provide the broadcast channel list; and
a broadcast screen turn-off option to turn off a display.

36. A computer-readable recording medium having code for performing the method of one of claims 31 to 35 implemented by a computer.
